# EUROPEAN PATENT SPECIFICATION

(11) **EP 0 985 483 B1**
(45) Date of publication and mention of the grant of the patent: **15.02.2006**
(21) Application number: 99304679.6
(22) Date of filing: 16.06.1999
(51) Int. Cl.: B23K 20/12, B61D 17/04, F16B 5/08, F16S 1/02, F16S 3/02

(54) **Hollow shape extruded frame member and structure body**
Hohlförmiges extrudiertes Rahmenprofil und Aufbaustruktur
Elément de cadre extrudé et châssis

(30) Priority: 16.06.1998 JP 16801698
(43) Date of publication of application: 15.03.2000
(73) Proprietor: Hitachi, Ltd., Chiyoda-ku, Tokyo 101-8010 (JP)
(72) Inventor: Ezumi, Masakuni, Kudamatsu-shi, Yamaguchi 744-0002 (JP); Satou, Akihiro, Hitachi-shi, Ibaraki 316-0006 (JP); Fukuyori, Kazusige, Kudamatsu-shi, Yamaguchi 744-0002 (JP); Kawasaki, Takeshi, Kudamatsu-shi, Yamaguchi 744-0002 (JP)
(74) Representative: Paget, Hugh Charles Edward

(56) References cited:
- EP-A- 0 797 043
- DE-A- 19 619 417
- DE-B- 2 344 638
- US-A- 3 385 182
- US-A- 3 984 961

## Description

The present invention relates to a hollow shape extruded frame member, according to the preamble of claim 1 (see, for example, EP-A-797 043), and a structure body manufactured by using a friction stir welding manner and relates particularly to suited to the structure body for example, such as an aluminum alloy member which is used in a railway vehicle and a structural building construction.

As described in EP-A-797 043 a friction stir welding method is a method in which by rotating a round rod (it is called as a rotary body) which is inserted to a joining portion of hollow shape extruded frame members to be subjected to joining and by moving the rotary rod along to a joining line of the frame members to be subjected to joining, then the joining portion of the frame members to be subjected to joining is exothermical heated and softened and the joining portion is elastically fluidized and is carried out to form a solid joining.

The rotary body for carrying out the friction stir welding comprises a small diameter portion which is inserted to the joining portion and a large diameter portion which is positioned at an outside portion. The small diameter portion and the large diameter portion of the rotary body have the same axis. A boundary face portion between the small diameter portion and the large diameter portion of the rotary body is inserted a little to the joining portion. The joining according to the friction stir welding is applied to an abutted portion of the frame members and an overlap portion of the frame members.

As shown in the above stated prior art, a protrusion portion of the frame member is provided to the joining portion of the frame member to be subjected to joining. This protrusion portion of the frame member is protruded to a side of the rotary body, and the protrusion portion of the frame member is carried out to join using the friction stir welding manner.

Further, as shown in the above stated prior art, a protrusion chip is provided to the joining portion of the frame member to be subjected to joining. This protrusion chip is protruded from a rib of an end portion of a hollow shape extruded frame member of one of the frame members to be subjected to joining to a side of another hollow shape extruded frame member to be subjected to joining. To this protrusion chip a face plate of the another hollow shape extruded frame member is overlapped.

Since the friction stir welding is that by inserting the rotary body being a joining tool to the hollow shape frame members to be subjected to joining and a metal is fluidized, a large force works on the frame members to be subjected to joining. Namely, the large force is a force for inserting the rotary body into the frame members to be subjected to joining and the frame members to be subjected to joining is necessary to endure the above stated large force.

As a result, when the hollow shape extruded frame members are joined, as shown in the above stated prior art, the metal is flown easily to a rear side. Therefore, it is necessary to form large the protrusion portion of the hollow shape extruded frame members for supplementing the flown metal. Further, void holes occur easily to a joining bead of the frame members.

As one means for preventing the above stated various defects shown in the above stated prior art, a thickness of the frame member to be subjected to joining of the joining portion is made thick, thereby the flow-out of the metal from the frame members to be subjected to joining can be prevented.

For example, making large a circular arc of a connection line between the face plate and the rib on the joining portion of the frame member, thereby a thickness of an outer portion of the frame member to be subjected to joining is made thick. Further, for example, making large a diameter of the circular arc of a joining line between the protrusion chip and the rib of the frame member, thereby the thickness of the outer portion of the frame member to be subjected to joining is made thick.

The above stated circular arc of the frame member to be subjected to joining is recessed to a side of the face plate of the frame member. Accordingly, a cross sectional area of the frame member to be subjected to joining becomes large and then a weight of the frame member to be subjected to joining increases.

DE 23 44 638 B shows an example of hollow extruded members joined by cold pressure welding to form a panel.

### Summary of the Invention :

An object of the present invention is provide a structure body wherein a light weight joint member or a light weight joining portion member of the structure body can be attained and a hollow shape extruded frame member wherein a light weight joint member or a light weight joining portion member of the hollow shape extruded frame member can be attained.

Another object of the present invention is provide a structure body wherein a small cross-sectional area of the structure body can be obtained and a hollow shape extruded frame member wherein a small cross-sectional area of the hollow shape extruded frame member can be obtained.

The above stated object can be attained by a connection line between a rib at a vicinity of a joining portion and a face plate of the structure body or the hollow shape extruded frame member exists to be a center or a connection line between a protrusion chip and a rib of the structure body or the hollow shape extruded frame member which is formed with a circular arc in which a side of a joining portion exists to be a center, namely a circular arc is protruded to a side of a hollow portion of the structure body or the hollow shape extruded frame member.

The present invention provides a hollow extruded frame member as set forth in claim 1 and a structures having first and second joined members as set forth in claims 6 and 7.

### Brief Description of the Drawings :

Fig. 1 is a partially enlarged longitudinal cross-sectional view showing a structure body having a joint member for use in a friction stir welding of one embodiment according to the present invention;
Fig. 2 is a partially enlarged longitudinal cross-sectional view of a structure body which is comprised of two hollow shape extruded frame members using the joint member of the structure body shown in Fig. 1; and
Fig. 3 is a partially enlarged longitudinal cross-sectional view showing a structure body having a joint member for use in a friction stir welding of another embodiment according to the present invention.

### Description of the Invention :

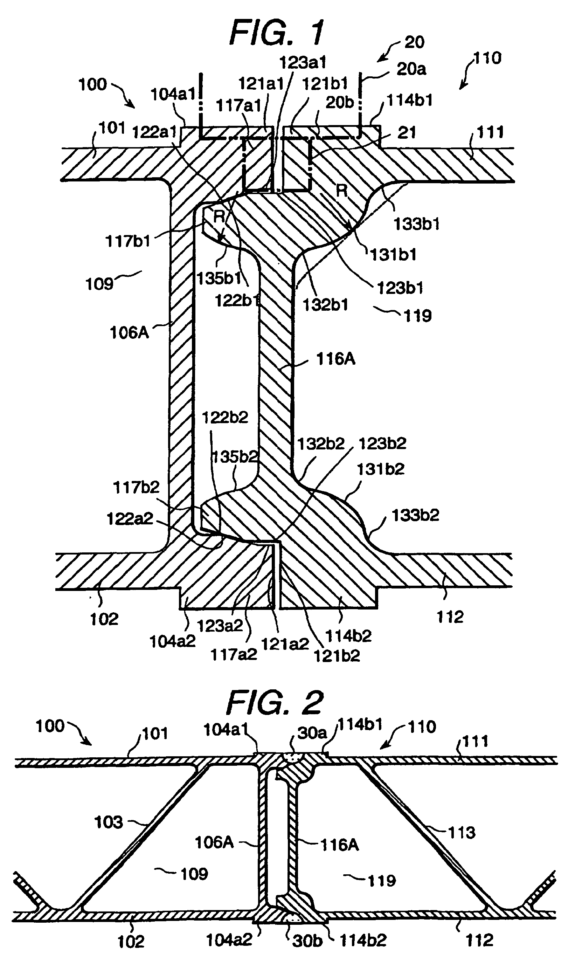

A structure body of one embodiment according to the present invention will be explained referring to Fig. 1 and Fig. 2. A member to be subjected to joining by using, for example, a friction stir welding is a metal material, for example, such an aluminum alloy hollow shape extruded frame member. By joining these frame members, a structure body, for example, such a car body of a railway vehicle is manufactured. According to an employment of plural frame members, a side body structure, a roof body structure, an end body structure, and a floor body structure of the car body of the railway vehicle are constituted.

In a case of the side body structure and the roof body structure of the car body of the railway vehicle, a length of the frame member for constituting the side body structure or the roof body structure is similar to a length of the car body of the railway vehicle at the maximum. A longitudinal direction of the frame member for constituting the side body structure or the roof body structure is directed for a longitudinal direction of the car body of the railway vehicle.

One hollow shape extruded frame member 100 for constituting the structure body comprises substantially parallel two face plates 101 and 102, plural ribs 103 and 106A for connecting the face plates 101 and 102, and two protrusion portions 104a1 and 104a2 which protrude to a thickness direction of the frame member 100.

Another hollow shape extruded frame member 110 for constituting the structure body comprises substantially parallel two face plates 111 and 112, plural ribs 113 and 116A for connecting the face plates 111 and 112, two protrusion porion 114b1 and 114b2 which protrude to a thickness direction of the frame member 110, and two protrusion chips 117b1 and 117b2 which protrude direction for from the rib 116A at an end portion to the frame member 110.

The plural ribs 103 of the frame member 100 are provided along to a width direction of the frame member 100. The rib 103 of the frame member 100 is provided to incline against to the face plates 101 and 102. The rib 106A of the frame member 100 is provided orthogonal to the face plates 101 and 102. A reference numeral 109 is a hollow portion of the frame member 100.

The plural ribs 113 of the frame member 110 are provided along to a width direction of the frame member 110. The rib 113 of the frame member 110 is provided to incline against to the face plates 111 and 112. The rib 116A of the frame member 110 is provided orthogonal to the face plates 111 and 112. A reference numeral 119 is a hollow portion of the frame member 110.

An end portion of the frame member 100, two vertical faces 121a1 and 121a2, two slope faces 122a1 and 122a2, a horizontal face 123a1 for connecting the vertical face 121a1 and the slope face 122a1, and a horizontal face 123a2 for connecting the vertical face 121a2 and the slope faces 122a2 are provided.

The vertical face 121a1 is provided at the end portion side of the face plate 101 of the frame member 100, and the vertical face 121a2 is provided at the end portion side of the face plate 102 of the frame member 100. The horizontal face 123a1 is provided in parallel to the face plate 101 of the frame member 100, and the horizontal face 123a2 is provided in parallel to the face plate 102 of the frame member 110.

The slope face 122a1 of the frame member 100 is provided in a face of a side of the face plate 101 of the protrusion chip 117a1, and the slope face 122a2 of the frame member 100 is provided in a face of a side of the face plate 102 of a protrusion chip 117a2.

The slope face 122a1 of the frame member 100 is provided in a recessed portion which receives the protrusion chip 117b1 of the frame member 110. The slope face 122a2 of the frame member 100 is provided in a recessed portion which receives the protrusion chip 117b2 of the frame member 110.

The slope face 122a1 is sloped from a position which enters to the thickness direction of the frame member 100 or from an end portion of the horizontal face 123a1. The slope face 122a2 is sloped from a position which enters to the thickness direction of the frame member 100 or from an end portion of the horizontal face 123a2.

The protrusion chip 117a1 is protruded to an outer portion (the frame member 100 side) of the width direction of the frame member 100 from the vertical face 121a1 of the frame member 100. The protrusion chip 117a2 is protruded to an outer portion (the frame member 100 side) of the width direction of the frame member 100 from the vertical face 121a2 of the frame member 100.

The protrusion portion 104a1 is provided to the end portion of the face plate 101 of the frame member 100, and the protrusion portion 104a2 is provided to the end portion of the face plate 102 of the frame member 100.

An end portion of the frame member 110, two vertical faces 121b1 and 121b2, two slope faces 122b1 and 122b2, a horizontal face 123b1 for connecting the vertical face 121b1 and the slope face 122b1, and a horizontal face 123b2 for connecting the vertical face 121b2 and the slope face 122b2 are provided.

The vertical face 121b1 is provided at the end portion side of the face plate 111 of the frame member 100, and the vertical face 121b2 is provided at the end portion side of the face plate 112 of the frame member 110. The horizontal face 123b1 is provided in parallel to the face plate 111 of the frame member 110, and the horizontal face 123b2 is provided in parallel to the face plate 112 of the frame member 110.

The slope face 122b1 of the frame member 110 is provided in a face of a side of the face plate 111 of the protrusion chip 117b1, and the slope face 122b2 of the frame member 110 is provided in a face of a side of the face plate 112 of the protrusion chip 117b2.

The slope face 122b1 of the frame member 110 is provided in a recessed portion which receives the protrusion chip 117a1 of the frame member 100, and the slope face 122b2 of the frame member 110 is provided in a recessed portion which receives the protrusion chip 117a2 of the frame member 100.

The slope face 122b1 is sloped from a position which enters to the thickness direction of the frame member 110 or from an end portion of the horizontal face 123b1, and the slope face 122b2 is sloped from a position which enters to the thickness direction of the frame member 110 or from an end portion of the horizontal face 123b2.

The protrusion chip 117b1 is protruded to an outer portion (the frame member 110 side) of the width direction of the frame member 110 from the vertical face 121b1 of the frame member 110. The protrusion chip 117b2 is protruded to an outer portion (the frame member 110 side) of the width direction of the frame member 110 from the vertical face 121b2 of the frame member 110. The protrusion portions 114b1 is provided to the end portions of the face plate 111 of the frame member 110. The protrusion portions 114b2 is provided to the end portions of the face plate 112 of the frame member 110.

The rib 116A of the frame member 110 is positioned at an extension line of a joining portion of the two frame members 100 and 110. The frame member 110 is supported by the rib 116A in which an axis center of a rotary body 20 is positioned at an extension line of a center of a plate thickness of the rib 116A of the frame member 110. Each of the vertical face 121b1 and the vertical face 121b2 of the frame member 110 is positioned a little at a center side of the width direction of the frame member 110 from a center of the plate thickness of the rib 116A. The vertical face 121b1 of the frame member 100 and the vertical face 121b2 of the frame member 110 are provided within a range of the extension line of the rib 116A. The plate thickness of the rib 116A of the frame member 110 is thicker than the plate thickness of the rib 106A of the frame member 100.

When the two frame members 100 and 110 are abutted, the vertical face 121a1 of the frame member 100 and the vertical face 121b1 of the frame member 110 are contacted together with. Further, when the two frame members 100 and 110 are abutted, the vertical face 121a2 of the frame member 100 and the vertical face 121b2 of the frame member 110 are contacted together with.

However, the above stated case is an ideal case, according to a dimension tolerance difference in the structure body, in many cases a gap is formed between the vertical face 121a1 of the frame member 100 and the vertical face 121b1 of the frame member 110 and also a gap is formed between the vertical face 121a2 of the frame member 100 and the vertical face 121b2 of the frame member 110.

In Fig. 1 and Fig. 2, the slope face 122a1 of the frame member 100 and the slope face 122b1 of the frame member 110 are shown to contact together with and further the slope face 122a2 of the frame member 100 and the slope face 122b2 of the frame member 110 are shown to contact together with, but in many cases there is a gap.

When the two frame members 100 and 110 are assembled, the faces of the outer faces of the two face plates 101 and 102 of the frame member 100 and the outer faces of the two face plates 111 and 112 of the frame member 110 are formed with the same faces. Namely, the slope faces 122a1 and 122b2 of the frame member 100 are recessed but the slope faces 122b1 and 122b2 of the frame member 110 are arisen. Accordingly, the two frame members 100 and 110 can be assembled easily.

Between a rear face of the face plate 111 which is positioned at the hollow portion 119 of the frame member 110 and the rib 116A of the frame member 110 is connected according to a circular arc 131b1 which is protruded to a side of the hollow portion 119 of the frame member 110 and a recessed circular arc 132b1 and a recessed circular arc 133b1 of the frame member 110 at both ends.

Further, between a rear face of the face plate 112 which is positioned at the hollow portion 119 of the frame member 110 and the rib 116A of the frame member 110 is connected according to a circular arc 131b2 which is protruded to a side of the hollow portion 119 and a recessed circular arc 132b2 and a recessed circular arc 133b2 at both ends.

The recessed portion of the circular arcs 132b1 and 133b1 of the frame member 110 is caused by protruding the circular arc 131b1 of the frame member 110. The recessed portion of the circular arcs 132b2 and 133b2 of the frame member 110 is caused by protruding the circular arc 131b2 of the frame member 110.

The recessed portion of the circular arcs 132b1 and 133b2 of the frame member 110 means that the recessed portion is recessed in comparison with a tangent line of a position of a central portion of the circular arc 131b1 of the frame member 110. The protrusion portion of the circular arc 131b1 of the frame member 110 can be called as a circular arc shape protrusion portion in the present invention.

Also, the recessed portion of the circular arcs 132b2 and 133b2 of the frame member 110 means that the recessed portion is recessed in comparison with a tangent line of a position of a central portion of the circular arc 131b2 of the frame member 110. The protrusion portion of the circular arc 131b2 of the frame member 110 can be called as a circular arc shape protrusion portion in the present invention.

The position of the circular arc 131b1 of the frame member 110 is determined to ensure a predetermined distance along to a tip end of a small diameter portion 21 of the rotary body 20 when the rotary body 20 is inserted to a predetermined position. A center position of the circular arc 131b1 of the frame member 110 is determined that a position of a corner portion of the small diameter portion 21 of the rotary body 20 which has inserted to the above predetermined position forms a standard basis.

Since an insertion force of the rotary body 20 is supported by the rib 116A of the frame member 110, in the prior art the metal can be flown out easily to an outer portion from a surrounding portion of this rib 116A.

Accordingly, the thickness of the above stated surrounding portion of this rib 116A of the frame member 110 is made thick. According to the experimentation by the inventors of the present invention, a distance from the corner portion of the small diameter portion 21 of the rotary body 20 to the circular arc 131b1 of the frame member 110 is 5 mm degree, for example.

As a result, in the prior art, the metal is flown out easily from the gap formed between the slope face 122a1 of the frame member 100 and the slope face 122b1 of the frame member 110 and also the metal is flown out easily from the gap formed between the protrusion chip 117b1 of the frame member 110 and the rib 106A of the frame member 100.

Herein, a dot line in Fig. 1 shows a connection line of the rib and the face plate according to the conventional technique of the prior art. In this example of the prior art, the connection line comprises a linear line at a central portion and circular arcs which are provided at both ends of the linear line. The above stated linear line at the central portion is a tangent line which contacts to a central portion of the circular arc 131b1 or the circular arc 131b2 of the frame member 110. As another example of the prior art, a whole connection line is formed to have a circular arc which is recessed to a side of a joining bead of the frame members 100 and 110.

Understood from the comparison the dot line of the connection line according to the prior art with the real line of the connection line according to the present invention, a cross-sectional area of the parts, which are the portion between the frame member 100 and the rib 106A and the portion between the frame member 110 and the rib 116A, can be made small according to by the employment of the present invention. As a result, according to the structure body of this embodiment according to the present invention, a light weight structure of the frame member for constituting the structure body can be attained.

In this embodiment according to the present invention, the recessed portions are formed at the both ends of the circular arc 131b1 of the frame member 110 and also at the both ends of the circular arc 131b2 of the frame member 110. However, such a recessed portion can be provided only one end of the circular arc 131b1 of the frame member 110 or one end of the circular arc 131b2 of the frame member 110. At a side where the recessed portion is not provided, a liner line is connected to an end portion of the circular arc and further this end portion and a rib (or a face plate) are connected by another circular arc. However, in this latter case, the degree of the light weight structure of the frame member for constituting the structure body can be lowered.

A rear face of a tip end of the protrusion chip 117b1 of the frame member 110 is formed with a circular arc which goes thinner according to the tip end of the protrusion chip 117b1 of the frame member 110. Also, a rear face of a tip end of the protrusion chip 117b2 of the frame member 110 is formed with a circular arc which goes thinner according to the tip end of the protrusion chip 117b2 of the frame member 110. A circular arc 135b1 is provided on the face plate 111 of the frame member 110 and a circular arc 135b2 is provided on the face plate 112 of the frame member 110. The circular arc 135b1 is provided on the face plate 111 has the same radius of the circular arc 131b1 provided on the face plate 111 and the circular arc 135b2 provided on the face plate 112 has the same radius of the circular arc 131b2 provided on the face plate 112.

The rotary body 20 for carrying out the friction stir welding use provides the small diameter portion 21 at a tip end of a large diameter round rod portion 20a. A boundary face portion 20b formed between the large diameter portion 20a and the small diameter portion 21 of the rotary body 20 has a circular arc shape which is recessed to a side of the large diameter portion 20a. The small diameter portion 21 of the rotary body 20 is a screw member.

The friction stir welding for joining the two frame members 100 and 110 is carried out by rotating the rotary body 20 and inserting the rotary body 20 to the two frame members 100 and 110 and moving it along to a joining line of the two frame members 100 and 110. An axis center of the rotary body 20 is that the side of the large diameter portion 20a of the rotary body 20 is inclined against the moving direction of the rotary body 20.

Accordingly, a rear end of the boundary face portion 20b of the rotary body 20 is inserted to the two frame members 100 and 110, however a front end of the boundary face portion 20b of the rotary body 20 is positioned at an outer side (an upper portion) from an outer face (in Fig. 1, in a case of the upper side protrusion portion 104a1 of the frame member 100 and the upper side protrusion portion 114b1 of the frame member 110) of an upper portion of an apex of the protrusion portion 104a1 of the frame member 100 and an upper portion of an apex of the protrusion portion 114b1 of the frame member 110.

The rear end of the boundary face portion 20b of the rotary body 20 is positioned between the protrusion portion 104a1 of the frame member 100 and the protrusion portion 114b1 of the frame member 110 and the outer faces of the two face plates 101 and 102 of the frame member 100 and the two face plates 111 and 112 of the frame member 110. The above stated "rear end" term and "front end" term in the present invention are defined from the moving direction of the rotary body 20 as a standard basis.

Fig. 1 shows a condition where the rotary body 20 is inserted to a predetermined position of the two frame members 100 and 110 for constituting the structure body. In Fig. 1, a part of the tip end of the small diameter portion 21 of the rotary body 20 is omitted. The tip end of the small diameter portion 21 of the rotary body 20 is positioned at a vicinity of the horizontal face 123a1 of the frame member 100 and the horizontal face 123b1 of the frame member 110.

During the friction stir welding process, the two frame members 100 and 110 are pressed and are restrained to a bed (not shown in figure) by means of a vise of an apparatus (not shown in figure) under from the upper portion. To contact the slope face 122a1 of the frame member 100 and the slope face 122b1 of the frame member 110 together with, the frame member 100 is pressed directing for (in Fig. 1, a right and left direction) the opposed frame member 110.

During the friction stir welding process, there is a roller (not shown in figure) which move accompany with the move of the friction stir welding use rotary body 20. The roller presses down the right and the left portion of the protrusion portion 104a1 of the frame member 100 and the protrusion portion 114b1 of the frame member 110 or the upper portion of the protrusion portion 104a1 of the frame member 100 and the upper portion of the protrusion 114b1 of the frame member 110.

Each of the friction stir welding for the upper and lower portions of the frame member 100 and the upper and lower portions of the frame member 110 is carried out as following. Namely, after one side face of the two frame members 100 and 110 has joined by the friction stir welding, turning over the two frame members 100 and 110 or by arranging the two rotary bodies 20 and 20, a simultaneous friction stir welding manner is carried out.

A number of the frame members 110 and 110 which are mounted on the bed is two or more than two. After the friction stir welding process, the structure body obtained by this friction stir welding process is carried out to join further according to the friction stir welding or a common welding and the car body of the railway vehicle is obtained.

To an abutted face of the frame members 100 and 110 the slope faces 122a1 and 122a2 of the frame member 100 and the slope faces 122b1 and 122b2 of the frame member 110 are provided. As a result, the two frame members 100 and 110 can be assembled and further a slip-off to the up and down directions between the two frame members 100 and 110 can be prevented.

Further, when the two slope face 122a1 of the frame member 100 and the slope face 122b1 of the frame member 110 and the slope face 122a2 of the frame member 100 and the slope face 122b2 of the frame member 110 are contacted, in comparison with a non-contact condition case, the flow-out of the metal in the above stated case can be prevented from these portions.

A gap formed between the vertical face 121a1 of the frame member 100 and the vertical face 121b1 of the frame member 110 is closed and further a gap formed between the vertical face 121a2 of the frame member 100 and the vertical face 121b2 of the frame member 110 is closed by the move of the metal from the protrusion portions 104a1 and 104a2 of the frame member 100 and the protrusion portions 114b1 and 114b2 of the frame member 110.

The vertical faces 121a1 and 121a2 of the frame member 100 and the vertical faces 121b1 and 121b2 of the frame member 110 may provide to incline, however it is necessary to make large the move amount of the metal from the protrusion portions 104a1 and 104a2 of the frame member 100 and the protrusion portions 114b1 and 114b2 of the frame member 110.

To the end portions of the protrusion chip 117b1 and 117b2 of the frame member 110 and the two slope faces 122a1 and 122a2 of the frame member 100 and the two slope faces 122b1 and 122b2 of the frame member 110 are provided. However it can provide the faces which are in parallel to the face plates 101 and 102 of the frame member 100 and to the face plates 111 and 112 of the frame member 110.

After the friction stir welding process, demands to occasions, the protrusion faces 104a1 of the frame member 100 and the protrusion face 114b1 of the frame member 110 may cut off to have the same face to form the outer face of the face plate 101 of the frame member 100 and the outer face of the face plate 111 of the frame member 110. Also, the protrusion face 104a2 of the frame member 100 and the protrusion face 114b2 of the frame member 110 may cut off to have the same face to form the outer face of the face plates 102 of the frame member 100 and the outer face of the face plate 112 of the frame member 110.

In a case where it is employed as the car body of the railway vehicle, as shown in Fig. 2, the protrusion face 104a1 of the frame member 100 and the protrusion face 104b1 of the frame member 110 which from the outer face of the car body of the railway vehicle are cut off. Also the protrusion face 104a2 of the frame member 100 and the protrusion face 104b2 of the frame member 110 which from the outer face of the car body of the railway vehicle are cut off. Reference numeral 30a and 30b shown in Fig. 2 denote a joining bead of the two frame members 100 and 110, respectively.

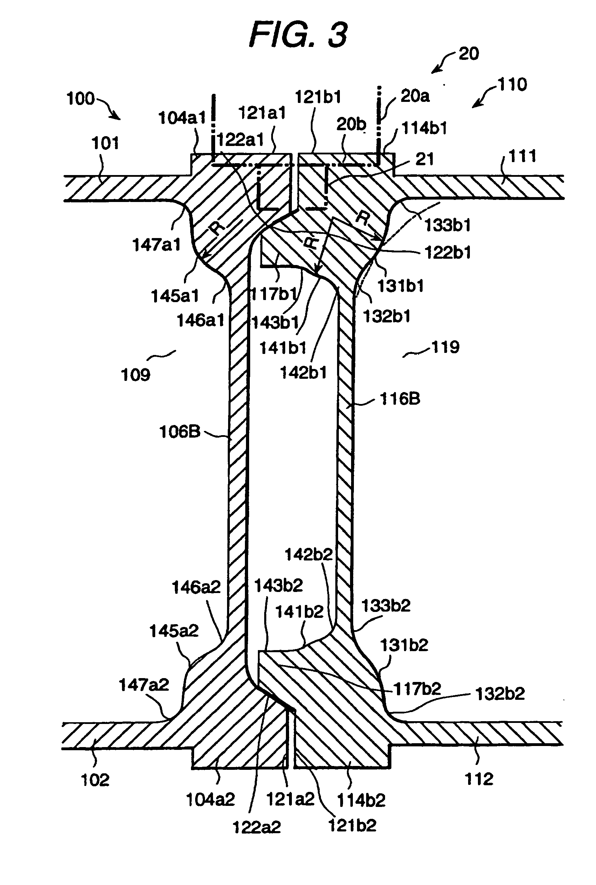

A structure body and a hollow shape extruded frame member of another embodiment according to the present invention will be explained referring to Fig. 3. Fig. 3 is a partially enlarged longitudinal cross-sectional view showing a structure body having a joint member for use in a friction stir welding of another embodiment according to the present invention.

In the structure body shown in Fig. 3, a joining portion is positioned at an intermediate portion between a rib 106B of the frame member 100 and a rib 116B of the frame member 110. Between the rib 116B and the face plate 111 of the frame member 110 is connected by one circular arc shape protrusion chip 131b1 and also between the rib 116B and the face plate 112 of the frame member 110 is connected by another circular arc shape protrusion chip 131b2.

A root of the rib 116B and the protrusion chip 117b1 of the frame member 110 are connected by a circular arc 141b1 which is raised to a side of the face plate 111 of the frame member 110 and two circular arcs 142b1 and 143b1 which are recessed directing for a side of the face plate 111 of the frame member 110. A root of the rib 116B and the protrusion chip 117b2 of the frame member 110 are connected by a circular arc 141b2 which is raised to a side of the face plate 112 of the frame member 110 and two circular arcs 142b2 and 143b2 which are recessed directing for a side of the face plate 112 of the frame member 110.

Between the rib 106B and the face plate 101 of the frame member 100 is connected by a circular arc 145a1 which is raised to a side of the hollow portion 109 and two circular arcs 146a1 and 147a1 which are recessed to a side of the vertical face 121a1 of the face plate 101 of the frame member 100. Further, between the rib 106B and the face plate 102 of the frame member 100 is connected by a circular arc 145a2 which is raised to a side of the hollow portion 109 and two circular arcs 146a2 and 147a2 which are recessed to a side of the vertical face 121a2 of the face plate 102 of the frame member 100.

A dot line shown in Fig. 3 is a connection line according to the conventional technique shown in the prior art and a whole connection line according to the conventional technique forms a circular arc. The connection line according to the conventional technique shown in the dot line against the circular arcs 141b1, 142b1 and 143b1 of the protrusion chip 117b1 is omitted. Also the connection line according to the conventional technique shown in the dot line against the circular arcs 141b2, 142b2 and 143b2 of the protrusion chip 117b2 is omitted. Further, the above stated two connection lines according to the conventional technique in the prior art shown in the dot lines at the side of the face plates 101 and 102 of the frame member 100 are omitted.

Each of the dimensions of the circular arcs 131b1, 141b1 of the face plate 111 of the frame member 110 and the circular arc 145a1 of the face plate 101 of the frame member 100 is the same. Namely, each of the radius of the circular arcs 131b1, 141b1 of the frame member 110 and the circular arc 145a1 of the frame member 100 has an equal size. Further, each of the dimensions of the circular arcs 131b2 and 141b2 of the face plate 112 of the frame member 110 and the circular arc 145a2 of the face plate 102 of the frame member 100 is the same. Namely, each of the radius of the circular arcs 131b2 and 141b2 of the frame member 110 and the circular arc 145a2 of the frame member 100 has an equal size.

According to the structure body and the hollow shape extruded frame member of this embodiment according to the present invention, since the load during the friction stir welding process is burdened according to the two ribs 106B and 116B, the vicinities of the two ribs 106B and 116B are formed thick. The vicinities of the two ribs 106B and 116B are the connection parts of the face plates 101 and 102 of the frame member 100 and the face plates 111 and 112 of the frame member 110.

Further, according to the structure body and the hollow shape extruded frame member of this embodiment according to the present invention, a total value of the plates thicknesses of the two ribs 106B and 116B can be made smaller than the structure body of the former embodiment according to the present invention shown in Fig. 1 and Fig. 2.

As a result, according to the structure body and the hollow shape extruded frame member of this embodiment according to the present invention, the light weight structure in the structure body and the light weight structure in the hollow shape extruded frame member can be obtained.

Even the plate thickness of the rib 116B of the frame member 110 is made thicker than the plate thickness of the rib 116A of the frame member 100 shown in Fig. 1 and Fig. 2, the plate thickness of the rib 106B of the frame member 110 and the plate thickness of the rib 116B of the frame member 110 can be the same thickness.

Further, in each of between the rib 106B and the face plates 111 and 112 of the frame member 110, between the rib 106B and the protrusion chip 117b1 of the plate face 111 of the frame member 110 and the protrusion chip 117b2 of the plate face 112 of the frame member 110 and further between the rib 106B and the face plates 101 and 102 of the frame member 100, the light weight structure in the structure body and the light weight structure in the hollow shape extruded frame member can be obtained.

Further, without of the provisions of the slope face 122a1 of the face plate 101 of the frame member 100 and the slope face 122a2 of the face plate 102 of the frame member 100, the horizontal face can be employed. Further, without of the provisions of the slope face 122b1 of the face plate 111 of the frame member 110 and the slope face 122b2 of the face plate 112 of the frame member 110, a horizontal face can be employed.

When the two frame members 100 and 110 are assembled, the slope face 122a1 of the face plate 101 of the frame member 100 and the slope face 122b1 of the face plate 111 of the frame member 110 are contacted together with and the gap is provided between the vertical face 121a1 of the face plate 101 of the frame member 100 and the vertical face 121b1 of the face plate 111 of the frame member 110.

Further, when the two frame members 100 and 110 are assembled, the slope face 122a2 of the face plate 102 of the frame member 100 and the slope face 122b2 of the face plate 112 of the frame member 110 are contacted together with and the gap is provided between the vertical face 121a2 of the face plate 101 of the frame member 100 and the vertical face 121b2 of the face plate 112 of the frame member 110. For example, an interval between the recessed portion slope faces 122a1 and 122a2 of the frame member 100 is provided to be smaller than an interval between the arisen portion slope faces 122b1 and 122b2 of the frame member 110.

As a result, according to the structure body and the hollow shape extruded frame member of this embodiment according to the present invention, the flow-out of the metal from the slope face 122a1 of the frame member 100 and the slope shape 122b1 of the frame member 110 can be prevented and further the flow-out of the metal from the slope face 122a2 of the frame member 100 and the slope face 122b2 of the frame member 110 can be prevented.

The circular arc shapes here described need not be true circular arcs but may have elliptical or other curvature provided that a convexly curving bulging surface is formed.

Although, the present invention has been described and illustrated in detail, it is be clearly understood that the same is by way of illustration and example, and it is not to be taken by way of limitation.

According to the structure body and the hollow shape extruded frame member of the present invention, where the friction stir welding manner is applied, the structure body and the hollow shape extruded frame member can be made with the light weight structure.

## Claims

1. A hollow extruded frame member (100; 110) having first and second substantially parallel face plates (101, 102; 111, 112) and a plurality of cross-ribs (103, 106B; 113, 116A, 116B) connecting said face plates, thereby defining interior void space (109; 119) of the frame member, and protrusion portions (104a1, 104a2, 114b1, 114b2) on the from face plates at a lateral edge of the frame member, protruding outwardly respective face plates in the tickness direction of the frame member,
one of said cross-ribs being an end cross-rib (106B; 116A, 116B), which, as seen in cross-section perpendicular to the extrusion direction, extends perpendicularly to said face plates at one lateral edge of the frame member and has junctions with said face plates at its respective ends,
at least one of said junctions of said face plates and said end cross-rib being a solid body of material having, as seen in said cross-section, a greater thickness than the face plate in a first direction which is perpendicular to said face plate and having a greater thickness than said end cross-rib in a second direction which is parallel to said face plate,
said solid body having a first curved surface (131b1, 132b1, 133b1; 131b2, 132b2, 133b2; 145a1, 146a1, 147a1; 145a2, 146a2, 147a2) which joins respective interior faces of the face plate and said end cross-rib bounding the adjacent interior space;
**characterised in that** said first curved surface has a portion (131b1; 131b2; 145a1; 145a2) which projects convexly into said adjacent void.

2. A member according to claim 1, wherein said curved surface further has two concavely curved end portions (132b1, 133b1; 132b2, 133b2; 146a1, 147a1, 146b1, 146b2) adjoining said convexly projecting portion (131b1; 131b2; 145a1; 145a2).

3. A member according to claim 1 or 2, wherein said solid body has a protrusion (117b1; 117b2) projecting laterally outwardly from said end cross-rib in the direction parallel to the face plate,
said solid body having a second curved surface (141b1, 142b1, 143b1; 141b2, 142b2, 143b2) which connects a surface of said protrusion (117b1; 117b2) and an exterior face of said end cross-rib,
said second curved surface having a portion (141b1; 141b2) which projects convexly.

4. A member according to claim 3, wherein said second curved surface further has two convexly curved end portions (142b1, 143b1; 142b2, 143b2) adjoining said convexly curved portion (141b1; 141b2).

5. A member according to claim 1 or 2, wherein said solid body has a protrusion (117b1; 117b2) projecting laterally outwardly from said end cross-rib in the direction parallel to the face plate,
said protrusion having a tip end distal from said end cross-rib and tapering towards said tip end and having adjacent said tip end inner and outer taper faces (122b1, 135b1; 122b2, 135b2),
said inner taper face (135b1; 135b2) being a convexly projecting surface.

6. A structure having first and second joined members,
said first member being a hollow extruded frame member (100; 110) according to any one of claims 1 to 5,
said second member being a hollow extruded frame member having first and second substantially parallel face plates and a plurality of cross-ribs connecting said face plates;
said first and second members being joined by two friction stir welding weld beads (30a, 30b);
a first one of said weld beads (30a, 30b) joining said first face plate of said first member to said first face plate of said second member and being located at the outside face of the structure at said junction of said first face plate of said first member and said end cross-rib thereof;
the second of said weld beads (30a, 30b) joining said second face plate of said first member to said second face plate of said second member and being located at the outside face of the structure at said junction of said second face plate of said first member and said end cross-rib thereof.

7. A structure having first and second joined members,
said first member being a hollow extruded frame member (110) according to any one of claims 3, 4 and 5,
said second member being a hollow extruded frame member having first and second substantially parallel face plates and a plurality of cross-ribs connecting said face plates;
said first and second members being joined by two friction stir welding weld beads (30a, 30b);
a first one of said weld beads (30a, 30b) joining said first face plate of said first member to said first face plate of said second member and being located at the outside face of the structure at said junction of said first face plate of said first member and said end cross-rib thereof;
the second of said weld beads (30a, 30b) joining said second face plate of said first member to said second face plate of said second member and being located at the outside face of the structure at said junction of said second face plate of said first member and said end cross-rib thereof,
one of said face plates of said second member overlapping and lying on said protrusion (117b1, 117b2) of said first member.

## Patentansprüche

1. Hohles extrudiertes Rahmenelement (100; 110) mit ersten und zweiten im wesentlichen parallelen Frontplatten (101, 102; 111, 112) und mehreren die Frontplatten verbindenden Querrippen (103, 106B; 113, 116A, 116B), wodurch ein innerer Leerraum (109; 119) des Rahmenelements definiert wird, sowie Vorsprungsabschnitte (104a1, 104a2, 114b1, 114b2) auf den Frontplatten an einer Seitenkante des Rahmenelements, die von den jeweiligen Frontplatten in der Dickenrichtung des Rahmenelements nach außen vorspringen,
wobei eine der Querrippen eine Endquerrippe (106B, 116A, 116B) ist, die, im Querschnitt senkrecht zur Extrudierungsrichtung gesehen, senkrecht zu den Frontplatten an einer Seitenkante des Rahmenelements verläuft und Verbindungen mit den Frontplatten an ihren jeweiligen Enden aufweist,
wobei mindestens eine der Verbindungen der Frontplatten und der Endquerrippe ein fester Materialkörper ist, der, in besagtem Querschnitt gesehen, eine größere Dicke als die Frontplatte in einer ersten Richtung aufweist, die senkrecht zur Frontplatte ist, und eine größere Dicke als die Endquerrippe in einer zweiten Richtung aufweist, die parallel zur Frontplatte verläuft,
wobei der feste Körper eine erste gekrümmte Oberfläche (131b1, 132b1, 133b1; 131b2, 132b2, 133b2; 145a1, 146a1, 147a1; 145a2, 146a2, 147a2) aufweist, die die jeweiligen Innenfronten der Frontplatten und die Endquerrippe verbindet und den angrenzenden Innenraum begrenzt;
**gekennzeichnet dadurch, daß** die erste gekrümmte Oberfläche einen Abschnitt (131b1; 131b2; 145a1; 145a2) aufweist, der konvex in den angrenzenden Leerraum hervorragt.

2. Element nach Anspruch 1, wobei die gekrümmte Oberfläche ferner zwei konkav gekrümmte Endabschnitte (132b1, 133b1; 132b2, 133b2; 146a1, 147a1, 146b1, 146b2) aufweist, die an den konvex hervorragenden Abschnitt (131b1; 131b2; 145a1; 145a2) angrenzen.

3. Element nach Anspruch 1 oder 2, wobei der feste Körper einen Vorsprung (117b1; 117b2) aufweist, der seitlich nach außen von der Endquerrippe in die zur Frontplatte parallele Richtung hervorragt,
wobei der feste Körper eine zweite gekrümmte Oberfläche (141b1, 142b1, 143b1; 141b2, 142b2, 143b2) aufweist, die eine Oberfläche des Vorsprungs (117b1; 117b2) und eine Außenfront der Endquerrippe verbindet,
wobei die zweite gekrümmte Oberfläche einen konvex hervorragenden Abschnitt (141b1; 141b2) aufweist.

4. Element nach Anspruch 3, wobei die zweite gekrümmte Oberfläche ferner zwei konvex gekrümmte Endabschnitte (142b1, 143b1; 142b2, 143b2) aufweist, die an den konvex gekrümmten Abschnitt (141b1; 141b2) angrenzen.

5. Element nach Anspruch 1 oder 2, wobei der feste Körper einen Vorsprung (117b1; 117b2) aufweist, der seitlich nach außen von der Endquerrippe in der zur Frontplatte parallelen Richtung hervorragt,
wobei der Vorsprung distal von der Endquerrippe ein spitzes Ende aufweist und sich zum spitzen Ende hin verjüngt sowie an das spitze Ende angrenzende innere und äußere Verjüngungsflächen (122b1, 135b1; 122b2, 135b2) aufweist,
wobei die innere Verjüngungsfläche (135b1; 135b2) eine konvex hervorragende Oberfläche ist.

6. Struktur mit ersten und zweiten verbundenen Elementen,
wobei das erste Element ein hohles extrudiertes Rahmenelement (100; 110) nach einem der Ansprüche 1 bis 5 ist,
wobei das zweite Element ein hohles extrudiertes Rahmenelement mit ersten und zweiten im wesentlichen parallelen Frontplatten und mehreren die Frontplatten verbindenden Querrippen ist;
wobei das erste und das zweite Element durch zwei Reibrührschweißnähte (30a, 30b) verbunden sind;
wobei eine erste der Schweißnähte (30a, 30b) die erste Frontplatte des ersten Elements mit der ersten Frontplatte des zweiten Elements verbindet und an einer Außenfront der Struktur an der Verbindung der ersten Frontplatte des ersten Elements und dessen Endquerrippe angeordnet ist;
die zweite der Schweißnähte (30a, 30b) die zweite Frontplatte des ersten Elements mit der zweiten Frontplatte des zweiten Elements verbindet und an der Außenfront der Struktur an der Verbindung der zweiten Frontplatte des ersten Elements und dessen Endquerrippe angeordnet ist.

7. Struktur mit ersten und zweiten verbundenen Elementen,
wobei das erste Element ein hohles extrudiertes Rahmenelement (110) nach einem der Ansprüche 3, 4 oder 5 ist,
wobei das zweite Element ein hohles extrudiertes Rahmenelement mit ersten und zweiten im wesentlichen parallelen Frontplatten und mehreren die Frontplatten verbindenden Querrippen ist;
wobei das erste und das zweite Element durch zwei Reibrührschweißnähte (30a, 30b) verbunden sind;
eine erste der Schweißnähte (30a, 30b) die erste Frontplatte des ersten Elements mit der ersten Frontplatte des zweiten Elements verbindet und an der Außenfront der Struktur an der Verbindung der ersten Frontplatte des ersten Elements und dessen Endquerrippe angeordnet ist;
wobei die zweite der Schweißnähte (30a, 30b) die zweite Frontplatte des ersten Elements mit der zweiten Frontplatte des zweiten Elements verbindet und an der Außenfront der Struktur an der Verbindung der zweiten Frontplatte des ersten Elements und dessen Endquerrippe angeordnet ist,
wobei eine der Frontplatten des zweiten Elements den Vorsprung (117b1, 117b2) des ersten Elements überlappt und auf diesem liegt.

## Revendications

1. Elément de châssis extrudé creux (100 ; 110) ayant des première et seconde plaques frontales sensiblement parallèles (101, 102 ; 111, 112) et une pluralité de nervures transversales (103, 106B ; 113, 116A, 116B) reliant lesdites plaques frontales, en définissant ainsi un espace vide intérieur (109 ; 119) de l'élément de châssis, et des parties faisant saillie (104a1, 104a2, 114b1, 114b2) sur les plaques frontales au niveau d'un bord latéral de l'élément de châssis, faisant saillie vers l'extérieur à partir des plaques frontales respectives dans la direction d'épaisseur de l'élément de châssis,
une desdites nervures transversales étant une nervure transversale d'extrémité (106B ; 116A, 116B) qui, lorsque vue en coupe transversale perpendiculairement à la direction d'extrusion, s'étend perpendiculairement par rapport auxdites plaques frontales à un bord latéral de l'élément de châssis, et a des jonctions avec lesdites plaques frontales à leurs extrémités respectives,
au moins une desdites jonctions desdites plaques frontales et de ladite nervure transversale d'extrémité étant un corps solide en matériau ayant, lorsque vu dans ladite coupe transversale, une épaisseur supérieure à la plaque frontale dans une première direction qui est perpendiculaire à ladite plaque frontale, et ayant une épaisseur supérieure à ladite nervure transversale d'extrémité dans une deuxième direction qui est parallèle à ladite plaque frontale,
ledit corps solide ayant une première surface incurvée (131b1, 132b1, 133b1 ; 131b2, 132b2 ; 145a1, 146a1, 147a1 ; 145a2, 146a2, 147a2) qui relie des faces intérieures respectives de la plaque frontale et ladite nervure transversale d'extrémité délimitant l'espace intérieur adjacent ;
**caractérisé en ce que** ladite première surface incurvée a une partie (131b1 ; 131b2 ; 145a1 ; 145a2) qui fait saillie de manière convexe dans ledit vide adjacent.

2. Elément selon la revendication 1, dans lequel ladite surface incurvée a en outre deux parties d'extrémité incurvées de manière concave (132b1, 133b1 ; 132b2, 133b2 ; 146a1, 147a1, 146b1, 146b2) contiguës à ladite partie faisant saillie de manière convexe (131b1 ; 131b2 ; 145a1 ; 145a2).

3. Elément selon la revendication 1 ou 2, dans lequel ledit corps solide a une saillie (117b1 ; 117b2) faisant saillie latéralement vers l'extérieur à partir de ladite nervure d'extrémité dans la direction parallèle à la plaque frontale,
ledit corps solide ayant une seconde surface incurvée (141b1, 142b1, 143b1 ; 141b2, 142b2, 143b2) qui connecte une surface de ladite saillie (117b1 ; 117b2) et une face extérieure de ladite nervure transversale d'extrémité,
ladite seconde surface incurvée ayant une partie (141b1 ; 141b2) qui fait saillie de manière convexe.

4. Elément selon la revendication 3, dans lequel ladite seconde surface incurvée a en outre deux parties d'extrémité incurvées de manière convexe (142b1, 143b1 ; 142b2, 143b2) contiguës à ladite partie incurvée de manière convexe (141b1 ; 141b2).

5. Elément selon la revendication 1 ou 2, dans lequel ledit corps solide a une saillie (117b1 ; 117b2) faisant saillie latéralement vers l'extérieur à partir de ladite nervure transversale d'extrémité dans la direction parallèle à la plaque frontale,
ladite saillie ayant une extrémité de pointe distale par rapport à ladite nervure transversale d'extrémité, et s'effilant vers ladite extrémité de pointe, et ayant, adjacentes à ladite extrémité de pointe, des faces effilées intérieure et extérieure (122b1, 135b1 ; 122b2, 135b2), ladite face effilée intérieure (135b1 ; 135b2) étant une surface faisant saillie de manière convexe.

6. Structure ayant des premier et second éléments reliés,
ledit premier élément étant un élément de châssis extrudé creux (100 ; 110) selon l'une quelconque des revendications 1 à 5,
ledit second élément étant un élément de châssis extrudé creux ayant des première et seconde plaques frontales sensiblement parallèles, et une pluralité de nervures transversales reliant lesdites plaques frontales,
lesdits premier et second éléments étant reliés par deux cordons de soudure de soudage par friction-malaxage (30a, 30b),
un premier desdits cordons de soudure (30a, 30b) reliant ladite première plaque frontale dudit premier élément à ladite première plaque frontale dudit deuxième élément, et étant situé sur la face extérieure de la structure, au niveau de ladite jonction de ladite première plaque frontale dudit premier élément et de ladite nervure transversale d'extrémité de celui-ci,
le second desdits cordons de soudure (30a, 30b) reliant ladite seconde plaque frontale dudit premier élément à ladite seconde plaque frontale dudit second élément, et étant situé sur la face extérieure de la structure au niveau de ladite jonction de ladite seconde plaque frontale dudit premier élément et de ladite nervure transversale d'extrémité de celui-ci.

7. Structure ayant des premier et second éléments reliés,
ledit premier élément étant un élément de châssis extrudé creux (110) selon l'une quelconque des revendications 3, 4 et 5,
ledit second élément étant un élément de châssis extrudé creux ayant des première et seconde plaques frontales sensiblement parallèles, et une pluralité de nervures transversales reliant lesdites plaques frontales,
lesdits premier et second éléments étant reliés par deux cordons de soudure de soudage par friction-malaxage (30a, 30b),
un premier desdits cordons de soudure (30a, 30b) reliant ladite première plaque frontale dudit premier élément à ladite première plaque frontale dudit second élément, et étant situé sur la face extérieure de la structure, au niveau de ladite jonction de ladite première plaque frontale dudit premier élément et de ladite nervure transversale d'extrémité de celui-ci,
le second desdits cordons de soudure (30a, 30b) reliant ladite seconde plaque frontale dudit premier élément à ladite seconde plaque frontale dudit second élément, et étant situé sur la face extérieure de la structure, au niveau de ladite jonction de ladite seconde plaque frontale dudit premier élément et de ladite nervure transversale d'extrémité de celui-ci,
une première desdites plaques frontales dudit second élément chevauchant ladite saillie (117b1, 117b2) dudit premier élément, et s'étendant sur celle-ci.
